Europäisches Patentamt

European Patent Office

Office européen des brevets

(19)

(11) Veröffentlichungsnummer: **0 255 135**
**A1**

(12) **EUROPÄISCHE PATENTANMELDUNG**

(21) Anmeldenummer: **87111050.8**

(22) Anmeldetag: **30.07.87**

(51) Int. Cl.³: **C 03 B 23/24**

(30) Priorität: 30.07.86 DE 3625798
30.07.86 DE 3625806
30.07.86 DE 3625797
30.07.86 DE 3625807

(43) Veröffentlichungstag der Anmeldung:
**03.02.88 Patentblatt 88/5**

(84) Benannte Vertragsstaaten:
**AT BE FR GB IT NL**

(71) Anmelder: **FLACHGLAS AKTIENGESELLSCHAFT**
**Otto-Seeling-Promenade 10-14**
**D-8510 Fürth(DE)**

(72) Erfinder: **Kulla, Josef**
**Müllensiefenring 10**
**D-8510 Witten(DE)**

(74) Vertreter: **Goddar, Heinz J., Dr. et al,**
**FORRESTER & BOEHMERT Widenmayerstrasse 4/1**
**D-8000 München 22(DE)**

(54) Verfahren und Vorrichtung zum Verschweissen der Scheibenkanten von Ganzglasmehrfachscheiben.

(57) Verfahren zum Verschweißen der Kanten von Ganzglasmehrfachscheiben, insbesondere Ganzglasdoppelscheiben, bei dem die sich durch einen langgestreckten Tunnelofen oder dergleichen bewegenden Einzelscheiben zugeschnitten, ggf. gewaschen, einer zumindest teilweisen Randglättung unterworfen, miteinander ausgerichtet und nach Vorwärmen auf eine unterhalb der Verformungstemperatur des Glases liegende Vorwärmtemperatur aufrecht stehend an den waagerechten und senkrechten Scheibenkanten miteinander verschweißt werden, dadurch gekennzeichnet, daß die zugeschnittenen und ggf. gewaschenen Einzelscheiben einzeln auf ihrer dem Scheibenzwischenraum der herzustellenden Ganzglasmehrfachscheibe abgewandten Fläche liegend vorgewärmt werden; und daß die Einzelscheiben anschließend aufgerichtet und zu Einzelscheibengruppen entsprechend jeweils einer herzustellenden Ganzglasmehrfachscheibe zusammengestellt werden, woraufhin die Kantenverschweißung erfolgt, sowie Vorrichtung zu seiner Durchführung.

Fig.1

0255135

Auslandsserie

Verfahren und Vorrichtung zum Verschweißen der
Scheibenkanten von Ganzglasmehrfachscheiben

-------------------------------------------------------------

Die Erfindung betrifft ein Verfahren zum Verschweißen
der Kanten von Ganzglasmehrfachscheiben, insbesondere
Ganzglasdoppelscheiben, nach dem Oberbegriff des Patentanspruches 1 sowie eine Vorrichtung zur Durchführung dieses Verfahrens nach dem Oberbegriff des Patentanspruches 12.

Bei einer bekannten Vorrichtung der gattungsgemäßen Art
(DE-PS 25 06 251) werden die Einzelscheiben der herzustellenden Ganzglasdoppelscheiben nach dem Schleifen
ihrer Kanten aufrechtstehend durch den langgestreckten
Tunnel-Schweißofen geführt, wobei sowohl das Vorwärmen
der Einzelscheiben auf eine Temperatur von ca. 500° C
als auch der Schweißvorgang bei aufrechtstehenden
Scheiben erfolgen. Andererseits ist es aus der US-PS
4 169 622 bereits bekannt, bei der Herstellung von
Ganzglasdoppelscheiben die Verschweißung bei waagerecht
angeordneten Scheiben vorzunehmen, das Abkühlen hingegen bei senkrecht angeordneten Scheiben; diese bekannte
Vorrichtung hat den Nachteil, daß es verhältnismäßig
schwierig ist, die Einzelscheiben beim Schweißvorgang
auf dem gewünschten Abstand zu halten. Bei der Vorrichtung nach der DE-PS 20 55 252 zum Herstellen von Einscheiben-Sicherheitsglas erfolgt das Vorwärmen der
Scheiben im liegenden Zustand, während das Biegen im
aufrechten Zustand erfolgt, jedoch handelt es sich dabei nicht um das Problem der Vorbereitung der Einzelscheiben von Ganzglasdoppelscheiben mit der speziell
dabei vorhandenen Temperaturbeanspruchung sowie den
dabei vorhandenen mechanischen Problemen des Handhabens
der Scheiben innerhalb des Tunnelofens. Das DE-GM 71 42
363 sowie die US-PS 31 66 397 betreffen das Abschmelzen
von Glasscheiben im Kantenbereich zum Verhindern von
Mikrorissen bzw. das Feuerpolieren der Glaskanten zur
Vermeidung eines ansonsten notwendigen aufwendigeren
Kantenschleifens, jedoch vermögen die dort beschriebenen Maßnahmen die oben angegebenen Probleme beim gattungsgemäßen Stand der Technik nicht zu verhindern.

Aus der DE-PS 10 63 349 sind ein Verfahren sowie eine
Vorrichtung zum Verschweißen von Ganzglasdoppelscheiben
bekannt, bei denen die Kanten der Einzelscheiben durch
ein Formrollenpaar nach Erhitzung auf die Schweißtemperatur, die im Falle von Natriumsilikatglas z.B. ca.
850° C betragen kann, zunächst aufeinander zu und dann
zusammengebogen und dabei verschmolzen werden. Das
Erhitzen der Kantenbereiche der Einzelscheiben erfolgt
dabei mittels Außenbrennern, die im wesentlichen senkrecht zur Scheibenebene gerichtete Flammen erzeugen.
Diese Vorgehensweise, bei der also in einem einzigen
Erhitzungsschritt die Randbereiche der Einzelscheiben
auf die Schweißtemperatur erhitzt werden, hat den Nachteil, daß verhältnismäßig große Scheibenbereiche auf
eine verhältnismäßig hohe Temperatur erhitzt werden
müssen, woraus ein erheblicher Zeit- und Energiebedarf
resultiert, der noch dadurch potenziert wird, daß ja
später in der Kühleinrichtung ein sehr großer, auf
relativ hoher Temperatur befindlicher Teil der Scheiben
heruntergekühlt werden muß. Dieser Nachteil beruht im
wesentlichen darauf, daß die Außenbrennerflammen nicht

431

unmittelbar die Umfangsränder der Einzelscheiben beaufschlagen können, da sie ja im wesentlichen auf die zur Scheibenebene parallelen Außenflächen der Randbereiche der Einzelscheiben gerichtet sind. Darüber hinaus ist es auch erforderlich, einen verhältnismäßig breiten Randbereich auf die Erhitzungstemperatur zu erwärmen. Ähnliche Vorgehensweisen wie beim gattungsbildenden Stand der Technik sind in der DE-PS 9 75 079, der DE-PS 12 58 036 und der US-PS 33 84 468 beschrieben. Die US-PS 32 05 056 zeigt allgemein eine Vorrichtung zum Herstellen von Ganzglasmehrfachscheiben mit die verschiedenen Erhitzungs- und Verformeinrichtungen durchlaufender Scheibenanordnung.

Aus der DE-PS 23 63 300 ist eine in diesem Zusammenhang interessierende Kippvorrichtung bekannt, bei der jeweils eine einer ersten Einzelscheibe einer herzustellenden Doppelglasscheibe nachfolgende Einzelscheibe mittels eines Kipprahmens um 180° verschwenkt und auf der vorangegangenen Einzelscheibe abgelegt wird. Alsdann werden beide Einzelscheiben mittels eines weiteren Kipprahmens in die vertikale Stellung hochgeschwenkt, wobei die Anschläge, an die die beiden Einzelscheiben auf dem letztgenannten Kipprahmen angelaufen sind, von dessen Kippachse einen derartigen Abstand haben, daß die aufrecht gestellten Scheiben auf Transportrollen des Hochkantförderers abgestellt werden, die oberhalb der Transportebene der Flachfördereinrichtung liegen. Hierdurch ist es möglich, die aufrecht gestellten Scheibenpaare bereits mittels des Hochkantförderers abzutransportieren, während der betreffende Kipprahmen noch nicht wieder seine Aufnahmestellung unterhalb der Förderebene der Flachfördereinrichtung erreicht hat. Die bekannte Vorrichtung macht es erforderlich, ein verhältnismäßig komplizierten Schwenkmechanismus vorzusehen, indem nämlich die auf der unteren Einzelscheibe
abzulegende nachfolgende Einzelscheibe naturgemäß an
dem betreffenden Kipprahmen zum Ablegen in geeigneter
Weise festgehalten werden muß, wobei insbesondere auch
die koplanare Ausrichtung der Einzelscheiben der herzustellenden Doppelglasscheibe, bei der es sich dort um
eine Isolierglasscheibe mit geklebten Randprofilen
handelt, in horizontaler Stellung auszuführen ist; beim
Aufrichten der miteinander ausgerichtet in Sandwichanordnung ausgerichteten Scheiben bereitet dann das Abnehmen von den Anschlägen des betreffenden Kipprahmens
in vertikaler Stellung noch Schwierigkeiten.

Bei der Vorrichtung nach der DE-PS 25 06 251 sind die
Führungselemente im übrigen als aerostatische Luftlager
ausgebildet, an denen die Einzelscheiben der mittels
der bekannten Vorrichtung herzustellenden Ganzglasdoppelscheibe mittels einer separaten Transporteinrichtung
während des Schweißvorganges gleitend vorbeibewegt
werden. Diese bekannte Vorrichtung hat sich in der
Praxis durchaus bewährt, jedoch hat es sich als wünschenswert herausgestellt, mittels einer einzigen Führungsvorrichtung die Einzelscheiben der herzustellenden
Ganzglasmehrfachscheibe nicht nur in dem gewünschten
Abstand halten und führen, sondern gleichzeitig auch an
den Brennereinrichtungen der Schweißeinrichtung in der
Schweißstation vorbeiführen zu können, und etwaige
Bewegungen, die sich beim Verformen und Verschweißen
der Glasränder bzw. -kanten ergeben, ausschließen.

Aus der DE-PS 10 81 196 ist bereits eine Vorrichtung
zum Verschweißen der Ränder von Mehrfachglasscheiben
bekannt, bei der mitfahrende Vakuumhalter verwendet

431

werden, jedoch bedarf das Vortransportieren und Rückführen sowie die exakte Positionierung der Einzelscheiben mittels dieser Vakuumhalter einer verhältnismäßig
aufwendigen und komplizierten Mechanik. Anderseits ist
aus der DE-OS 35 29 892 bereits der Gedanke bekannt,
Vakuumendlosbänder zum Transportieren hochkantstehender
Glastafeln, dort zur Isolierglasherstellung, zu verwenden, wobei aber die Glasscheiben über einen langgestreckten Bereich jeweils zwischen zwei luftundurchlässigen Saugbändern, an einem offenen Unterdruckkanal
anliegend, mit Unterdruck beaufschlagt werden.

Derartige Vakuumendlosbänder verfügen nicht über Aggregate, die die zur Herstellung von Ganzglasdoppelscheiben auf z.B. 500° C erhitzten Glasscheiben problemlos
transportieren.

Der Erfindung liegt die Aufgabe zugrunde, das gattungsgemäße Verfahren und die gattungsgemäße Vorrichtung
dahingehend weiterzubilden, daß möglichst ohne Kantenschliff formatunabhängig ein gleichmäßiges Beheizen der
Einzelscheiben bei höheren Temperaturen in der Vorwärmzone ohne aufwendige Scheibenführungen ermöglicht wird,
wobei die bislang üblichen Transportmittel vereinfacht
und ein gleichmäßigerer Verschleiß derselben durch
ausschließliche Anordnung der Transportmittel im Ofen
gewährleistet sein sollen.

Insbesondere soll es dabei möglich sein, mit verringertem Energieaufwand und unter geringerer thermischer
Belastung der Scheiben unter erheblicher Zeitersparnis
Ganzglasmehrfachscheiben mit für den jeweiligen Anwendungszweck optimierter Randkonfiguration herzustellen.
Ferner strebt die Erfindung vorzugsweise an, bei einfacherem Aufbau eines vorzugsweise verwendeten Kippmechanismus die liegend herangeführten aufeinanderfolgenden Einzelscheiben in vertikaler Anordnung miteinander
ausrichten zu können, wobei das Abstellen der Einzelscheiben von den Anschlägen der Kipprahmen auf die
Scheibenkanten in besonders zuverlässig schonender
Weise ermöglicht werden soll. Schließlich wird erfindungsgemäß auch angestrebt, in der Schweißstation zur
Herstellung der Ganzglasmehrfachscheiben die Einzelscheiben zuverlässig halten, positionieren und transportieren zu können. Erfindungsgemäß wird diese Aufgabe
bei einem Verfahren der eingangs genannten Art durch
die im Kennzeichen des Patentanspruches 1 aufgeführten
Merkmale gelöst. Die zur Lösung der der Erfindung zugrundeliegenden Aufgabe vorgeschlagene Vorrichtung ist
durch die im Kennzeichen des Patentanspruches 12 genannten Merkmale charakterisiert. Besonders bevorzugte
Ausführungsformen des Verfahren sowie der Vorrichtung
nach der Erfindung sind Gegenstand der Patentansprüche
2 und 3 bzw. 5 bis 10.

Dadurch, daß erfindungsgemäß in Abkehr vom bisherigen
Stand der Technik bei der Herstellung von Ganzglasdoppelscheiben die Einzelscheiben liegend im Vorwärmofen
vorgewärmt werden, läßt sich eine formatunabhängige,
gleichmäßige Beheizung bei hoher Formstabilität der
Scheiben und dadurch erzielbaren höheren Vorwärmtemperaturen erreichen, wobei keinerlei Kippsicherung und
dergleichen erforderlich ist. Werden die Scheibenkanten, wie dies erfindungsgemäß besonders vorteilhaft
ist, in der beanspruchten Weise feuerpoliert, so brauchen die Einzelscheiben vor dem Einbringen in den Tunnelofen nicht geschliffen zu werden, vielmehr ist auf
diese Weise sichergestellt, daß auch die waagerechten

431

unteren Scheibenkanten, auf denen die Glasscheiben in der Schweißstation laufen, vollkommen eben sind, wodurch Ungenauigkeiten vermieden werden und auch keine Mikrorisse auftreten können.

Der Erfindung liegt in bevorzugter Weiterbildung insbesondere auch die überraschende Erkenntnis zugrunde, daß es gelingt, die beschriebenen Nachteile des Standes der Technik zu beheben und die gestellte Aufgabe zu lösen, wenn der bisher vorgesehene einzige Erhitzungsschritt, um die Randbereiche der Einzelscheiben auf die Schweißtemperatur zu erhitzen, in zwei Stufen zerlegt wird, indem nämlich zunächst lediglich das Erwärmen der Randbereiche der Einzelscheiben auf eine unterhalb der Schweißtemperatur liegende Verformungstemperatur erfolgt und erst nach dem Aufeinander-Zu-Biegen der Kantenbereiche der Einzelscheiben auf Schweißtemperatur erhitzt wird und schließlich die Scheibenkanten miteinander verschmolzen werden. Dies hat den Vorteil, daß nur ein verhältnismäßig schmaler Kantenbereich auf die schließlich zum Verschweißen und Verschmelzen benötigte Schweißtemperatur erhitzt zu werden braucht, mit entsprechend geringerer thermischer Belastung des Scheibenzentrums und erheblichen Vorteilen beim späteren Kühlvorgang, wobei zum anderen gewährleistet ist, daß einerseits in der ebenen Scheibenkonfiguration beim Erwärmen auf die Verformungstemperatur und zum anderen in der gebogenen Konfiguration der Kantenbereiche der Scheiben beim Erhitzen auf die Schweißtemperatur die Brennerflammen, vorzugsweise in bekannter Weise Gasbrennerstrahlen, unter jeweils optimalem Winkel auf die zu erwärmenden bzw. erhitzenden Bereiche gerichtet werden können.

Sollte aus Platzgründen der Vorwärmofen im rechten
Winkel zur Schweißstation angeordnet sein oder die
Glasscheiben aus einem Vorwärmofen zwei und mehreren
Schweißstationen zugeführt werden, beruht die Erfindung
in bevorzugter Weiterbildung auf der überraschenden
Erkenntnis, daß es gelingt, die Nachteile der bekannten
Aufricht-Vorrichtung zu vermeiden und eine wesentlich
einfachere Aufricht- und Ausrichtvorrichtung zu schaffen, welche ohne aufwendiges Aufeinanderlegen der Einzelscheiben in Horizontalposition unter Beibehaltung
des Vorteiles, daß die jeweils nicht mit den Förderrollen des Flachförderers in Kontakt gekommenen Seiten der
Einzelscheiben dem Scheibenzwischenraum der herzustellenden Doppelglasscheibe zugewandt werden, die einwandfreie Positionierung der Einzelscheiben in Hochkantstellung nach horizontalem Herantransportieren gestattet, wenn man zwei Kipprahmen verwendet, die gegensinnig aus einer jeweils horizontalen Aufnahmestellung in
eine jeweils im wesentlichen vertikale Übergabestellung
bewegbar sind, wobei der Flachförderer sich unterhalb
der Unterkante des Hochkantförderers über den gesamten
Aufnahmebereich der beiden abgesenkten, in Aufnahmestellung befindlichen Kipprahmen erstreckt. Die Anschläge der Kipprahmen sind dabei in Aufnahmestellung
unter die Transportebene des durchgehenden Flachförderers abgesenkt, so daß also die beiden auf dem Flachförderer vereinzelt mit Abstand herangeführten Einzelscheiben insbesondere den Anschlag des in Förderrichtung gesehen "ersten" Kipprahmens ohne weiteres passieren können. Sobald die Kipprahmen dann hoch geschwenkt
werden, rutschen die Einzelscheiben auf diesen geringfügig in Richtung auf die Kippachsen, wodurch sie an
den Anschlägen zur Anlage kommen. Die Anschläge der
Kipprahmen gewährleisten, infolge ihres vorgegebenen

431

Abstandes von den Kippachsen, daß die unteren Scheibenkanten auf ein Niveau angehoben werden, welches geringfügig oberhalb der Transportrollen des Hochkantförderers liegt. Diese wiederum sind auf ein Niveau angeordnet, welches oberhalb der Transportebene der Förderrollen des Flachförderers liegt. Sobald die aufgerichteten
Einzelscheiben dann auf den Transportrollen des Hochkantförderers abgestellt worden sind, kann in bekannter
Weise auch ihre Längspositionierung durch gegenseitiges
Verschieben auf den Transportrollen des Hochkantförderers erfolgen, beispielsweise mittels einer Schubstange
oder dgl., durch die die beiden Einzelscheiben dann
weitertransportiert werden. Da die auf den Transportrollen des Hochkantförderers abgestellten Einzelscheiben mit dem Hochkantförderer selbst oberhalb des durchgehenden Flachförderers liegen, können mittels des
Flachförderers die dann wieder in die Aufnahmestellung
abgesenkten Kipprahmen erneut mit Einzelscheiben beschickt werden, während die auf dem Hochkantförderer
befindlichen Einzelscheiben noch nicht abtransportiert
sind, beispielsweise während des relativ langsamen
Vorschubes derselben, bei der Herstellung von Ganzglasdoppelscheiben, in eine Schweißstation.

Die erfindungsgemäß vorgesehene Übernahme- und Ausrichteinrichtung gewährleistet ein einwandfreies Positionieren der Einzelscheiben unter weitestgehender
Schonung der Scheibenränder, die ja bei der erfindungsgemäßen Vorrichtung noch nicht mit einem Randprofil
oder dergleichen vor dem Aufrichten versehen sind. Dies
ist von besonderer Bedeutung bei der Herstellung von
Ganzglasdoppelscheiben, bei der die Einzelscheiben dann
im Anschluß an das Aufrichten mittels der erfindungsgemäßen Vorrichtung in eine Schweißstation oder dergleichen überführt werden.

Schließlich beruht die Erfindung auch auf der Erkenntnis, daß es gelingt, sich die an sich bekannten Vorteile von mitlaufenden Saugbändern zunutze zu machen, ohne die mechanischen und steuerungstechnischen Probleme mitlaufender Vakuumhalter in Kauf nehmen zu müssen, indem mit einzelnen, in Längsrichtung mit Abstand angeordneten Saugöffnungen versehene Saugbänder verwendet werden, die ihrerseits an einem mit Unterdruck beaufschlagbaren Vakuumkasten anliegen. Hierdurch ist gewährleistet, daß die Einzelscheiben lediglich punktweise, wie bei der Verwendung einzelner Vakuumhalter, mit der erforderlichen Haltekraft beaufschlagt werden, während gleichzeitig die endlose Ausbildung der Saugbänder einen besonders eleganten synchronen mechanischen Antrieb der erforderlichen Saugbandpaare gewährleistet. Besonders vorteilhaft ist es dabei, wenn, wie dies eine besondere Ausführungsform der Erfindung vorschlägt, der Vakuumkasten zweiteilig ausgebildet ist, nämlich einmal aus einer Tragkammer bestehend, an der die mit den Saugbohrungen versehenen Saugbänder anliegen, und zum anderen einen Unterdruckkanal aufweisend, der seinerseits mit der Unterdruckquelle verbunden ist und über Verbindungsöffnungen mit der Tragkammer kommuniziert. Der Querschnitt der Verbindungsöffnungen läßt sich dabei variieren, zumindest lassen sich diese teilweise schließen, so daß Druckverluste beim Ein- und Ausfahren der durch das betreffende Saugbandpaar zu halternden Einzelscheiben vermieden werden.

Weitere Merkmale und Vorteile der Erfindung ergeben sich aus den Ansprüchen und aus der nachfolgenden Beschreibung, in der Ausführungsbeispiele anhand der

431

schematischen Zeichnung im einzelnen erläutert sind.
Dabei zeigt:

Fig. 1    ein Ausführungsbeispiel einer Vorrichtung nach der Erfindung in der Draufsicht, teilweise geschnitten;

Fig. 2    das Ausführungsbeispiel von Figur 1
entlang des Schnittes in Richtung der
Pfeile II-II von Figur 1;

Fig. 3    ein Ausführungsbeispiel einer Feuerpoliereinrichtung der Vorrichtung nach der
Erfindung im Schnitt senkrecht zur Tunnelofenachse;

Fig. 4    die Feuerpoliereinrichtung von Figur 3
in der Draufsicht, teilweise geschnitten;

Fig. 5    ein Detail der Feuerpoliereinrichtung
von Figur 3 und 4 in vergrößertem Maßstab im Schnitt senkrecht zur Tunnelofenlängsachse;

Fig. 6    ein Ausführungsbeispiel einer Schweißvorrichtung nach der Erfindung in der
Draufsicht;

Fig. 7    das Ausführungsbeispiel der erfindungsgemäßen Vorrichtung von Figur 6 in der
Seitenansicht, teilweise geschnitten;

Fig. 8    einen Schnitt entlang der Linie VIII-

431

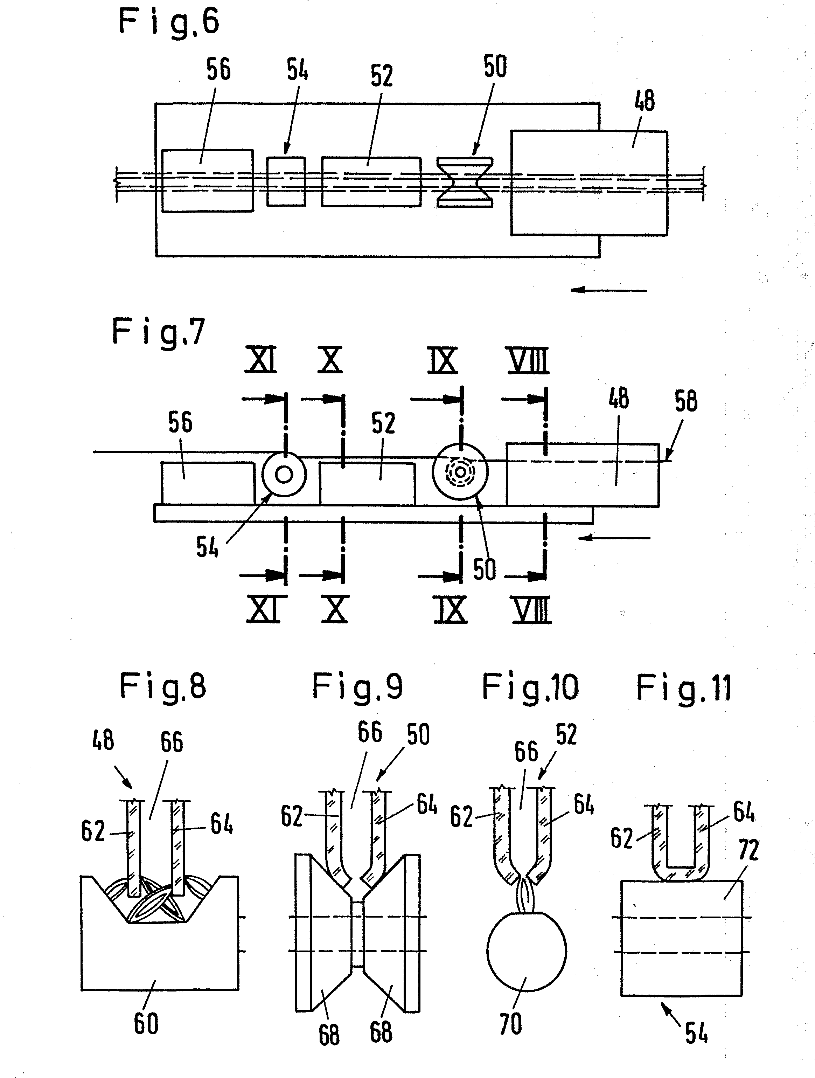

VIII von Figur 7;

Fig. 9    einen Schnitt entlang der Linie IX-IX von Figur 7;

Fig. 10   einen Schnitt entlang der Linie X-X von Figur 7;

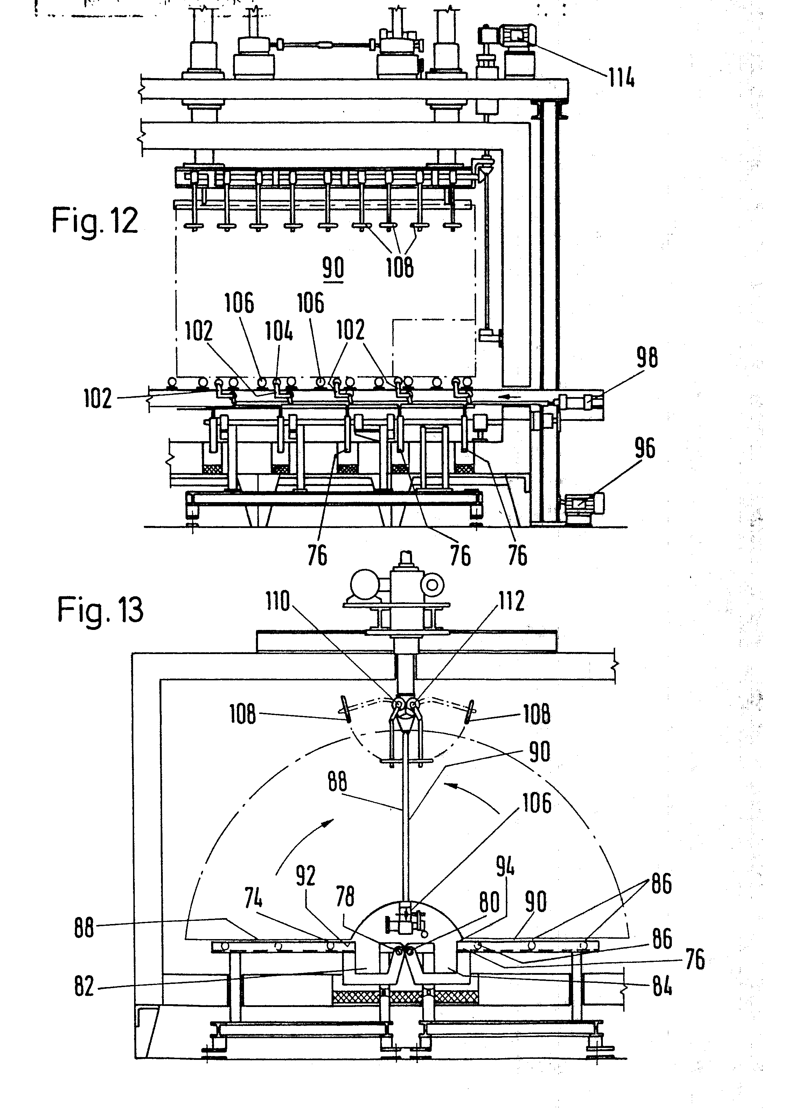

Fig. 11   einen Schnitt entlang der Linie XI-XI von Figur 7;

Fig. 12   ein Ausführungsbeispiel einer Aufricht-Vorrichtung nach der Erfindung in der Vorderansicht aus der Transportrichtung des Flachförderers gesehen, teilweise geschnitten;

Fig. 13   die Vorrichtung von Figur 12 in der Seitenansicht, in Figur 12 von links gesehen, teilweise geschnitten;

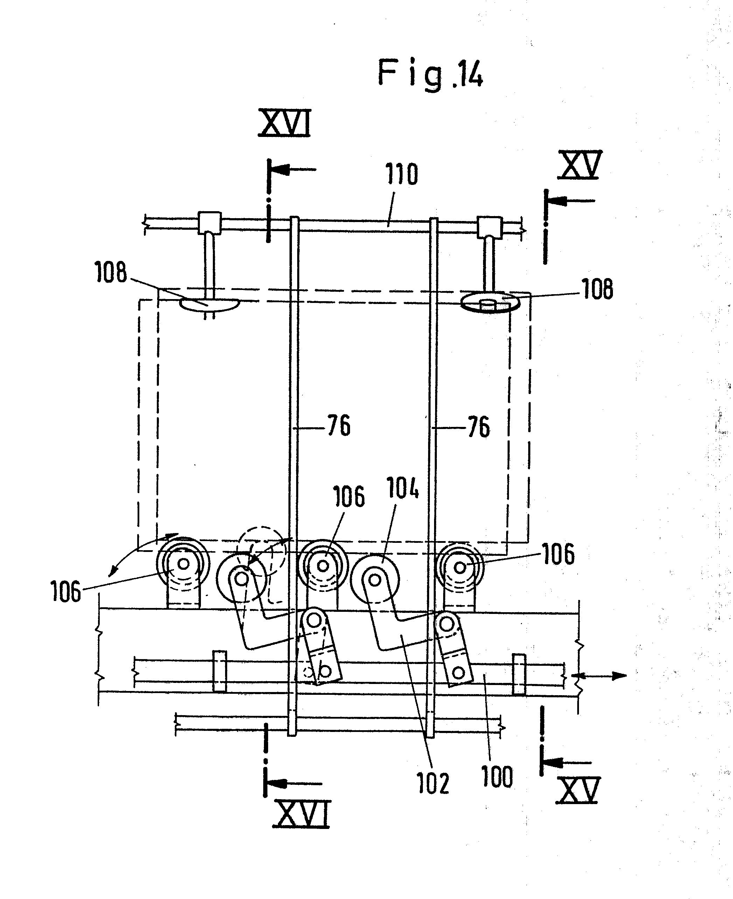

Fig. 14   eine ähnliche Darstellung wie Figur 12, wobei aber in vergrößerter Darstellung die Übernahmeeinrichtung wiedergegeben ist;

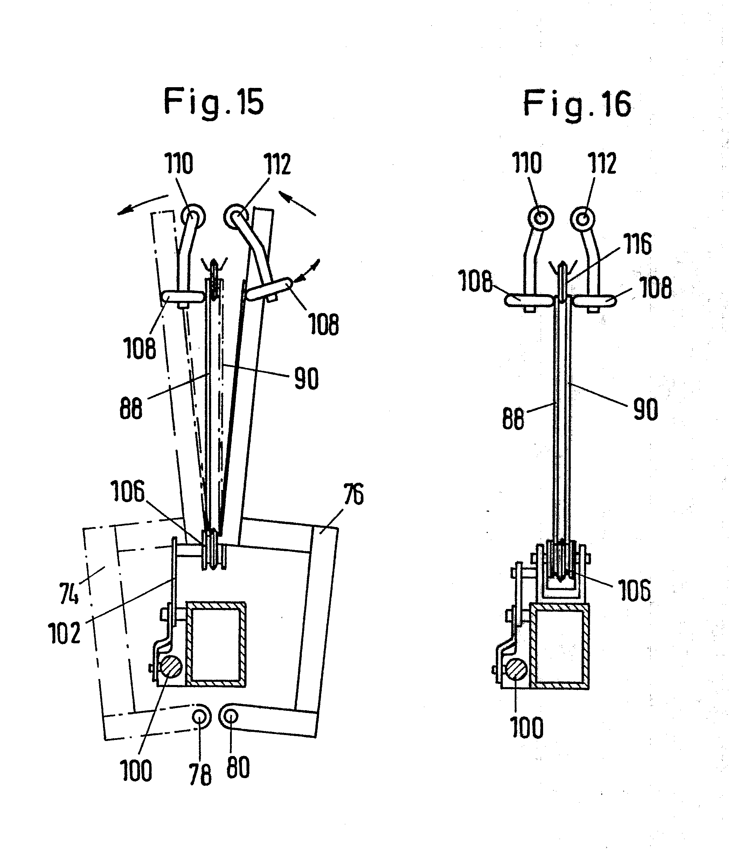

Fig. 15   einen Schnitt entlang der Linie XV-XV von Figur 14, in Richtung der Pfeile gesehen;

Fig. 16   einen Schnitt entlang der Linie XVI-XVI von Figur 14, in Richtung der Pfeile gesehen;

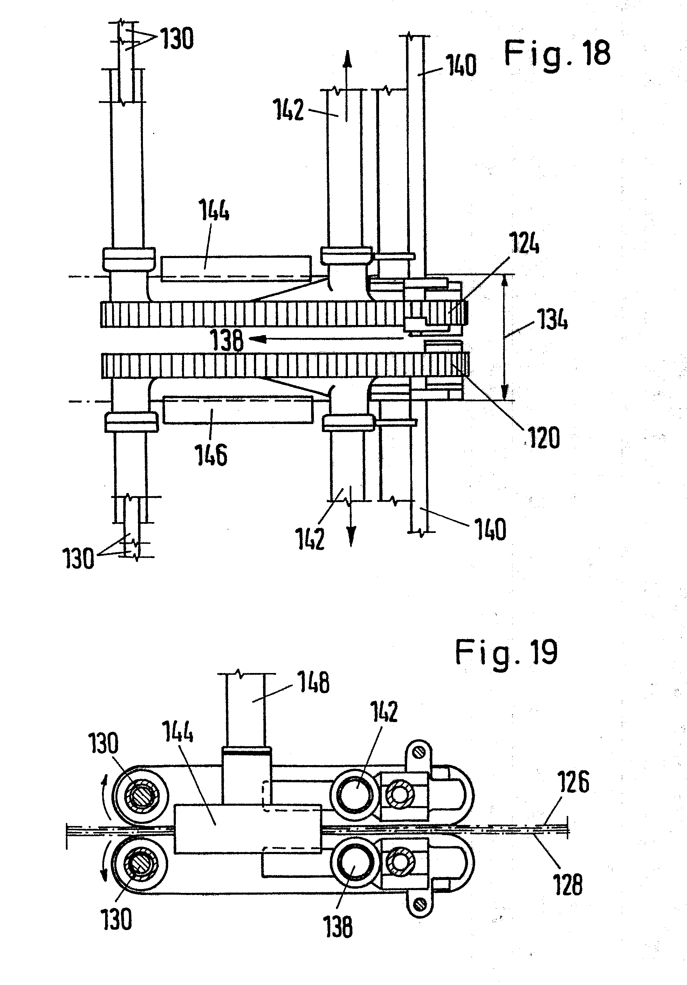

Fig. 17    ein Ausführungsbeispiel einer Fixier-
           und Führungs-Vorrichtung nach der Er-
           findung in der Seitenansicht, teilweise
           geschnitten;

Fig. 18    das Ausführungsbeispiel von Figur 17 in
           der Vorderansicht, teilweise geschnitten;

Fig. 19    das Ausführungsbeispiel von Figur 17 und
           18 in der Draufsicht, teilweise geschnitten;

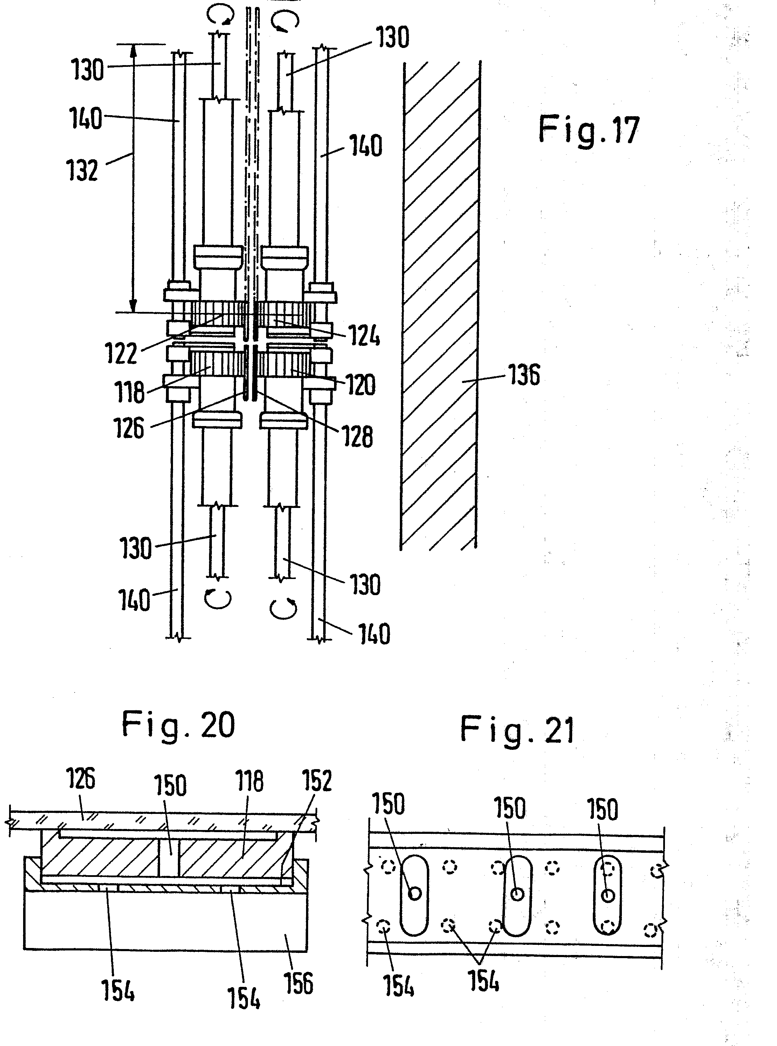

Fig. 20    einen Schnitt senkrecht zur Längsrichtung durch ein Saugband nebst Vakuumkasten des Ausführungsbeispiels von Figur
           17 - 19 in vergrößerter Darstellung; und

Fig. 21    eine Draufsicht auf das Saugband von
           Figur 20.

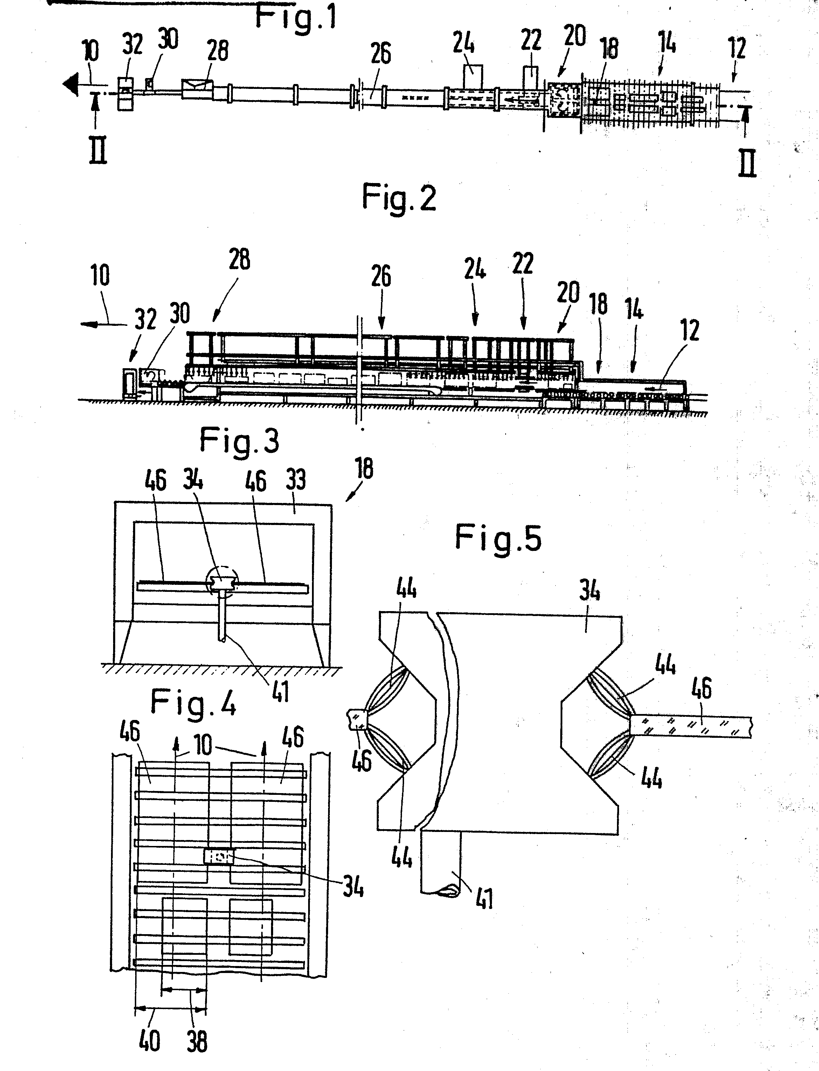

Wie Figur 1 und 2 erkennen lassen, weist die erfindungsgemäße Vorrichtung, die im wesentlichen aus einem
langgestreckten Tunnelofen besteht, ähnlich demjenigen,
wie er z.B. in der DE-PS 25 06 251 beschrieben ist, in
Richtung des die Transportrichtung kennzeichnenden
Pfeiles 10 aufeinanderfolgend eine in ihren Einzelheiten nicht gezeigte Zuführeinrichtung 12 zum Zuführen
gebrochener, vorstehend und im folgenden als "zugeschnitten" bezeichneter Einzelscheiben sowie im Anschluß daran eine aus einem Waagerechtofen 14 bestehen-

431

de Vorwärmeinrichtung auf, in der die Einzelscheiben auf Transportrollen bekannter Art liegend transportiert werden. Die Einzelheiten einer Feuerpoliereinrichtung 18, die in einer entsprechenden Feuerpolierstation angeordnet ist, werden weiter unten unter Bezugnahme auf die Figuren 3 bis 5 noch weiter erläutert. An die Feuerpoliereinrichtung 18 schließt eine Aufrichteinheit 20 an, in der jeweils die Einzelscheiben, hier die beiden Einzelscheiben einer Ganzglasdoppelscheibe, so aufgerichtet und miteinander ausgerichtet werden, daß die nicht mit den Transportrollen des Waagerechtofens 14 in Kontakt gekommenen Flächen dem Scheibenzwischenraum der herzustellenden Ganzglasdoppelscheibe zugewandt sind. In einer Waagerechtschweißeinrichtung 22 werden in bekannter Weise die oberen und unteren Waagerechtkanten der Ganzglasdoppelscheiben miteinander verschweißt, woraufhin in einer Senkrechtschweißeinrichtung 24 das Verschweißen der Senkrechtkanten der Scheiben erfolgt; ggf. können die Scheiben zwischen der Waagerechtschweißeinrichtung 22 und der Senkrechtschweißeinrichtung 24 um 90° um eine senkrecht zur Scheibenebene liegende Achse gedreht werden, so daß in diesem Fall die Senkrechtschweißeinrichtung 24 ebenfalls stationär angeordnet sein und die durch sie hindurchgeführten Scheiben verarbeiten kann. In aufrechter Position werden die fertigen Ganzglasdoppelscheiben in einem Kühlofen 26 abgekühlt und anschließend nach Sortieren in einer Sortierstation 28 in einer Dreh- und Palettierstation 30 gedreht und einpalettiert, woraufhin in einer Spülstation 32 eine abschließende Spülung erfolgt.

Wie Figur 3 und 4 erkennen lassen, weist die Feuerpoliereinrichtung 18 einen Polierbrenner 34 auf, der in der Mitte zwischen zwei liegend nebeneinander auf einer Rollenbahn in Richtung der in Figur 4 gezeigten Pfeile mit einander zugewandten (späteren) Waagerechtkanten zweier Einzelscheiben 46 angeordnet ist. Figur 4 läßt erkennen, daß dabei Einzelscheiben 46 mit unterschiedlichen Formaten bearbeitet werden können, nämlich zwischen einer minimalen Scheibenbreite 38 und einer maximalen Scheibenbreite 40. Figur 4 läßt dabei erkennen, im Zusammenwirken mit Figur 3, auf welche Weise die Einzelscheiben 46 bei ihrem Transport durch den Waagerechtofen 14 auf Transportrollen 42 abgestützt sind, wobei in Figur 4 der Pfeil wiederum die Transportrichtung 10 bezeichnet.

Aus Figur 5 ist erkennbar, daß der dort gezeigte Polierbrenner 34 mit seinen Brennerstrahlen bzw. Brennerflammen 44 infolge seiner X-förmigen Ausbildung die Waagerechtkanten der beiden Einzelscheiben 46 schräg zur Scheibenebene hin gerichtet beaufschlagt und auf diese Weise feuerpoliert. Die Gaszuführung bzw. allgemein die Energiezuleitung zu dem Polierbrenner 34 erfolgt über die entsprechende Leitung 41.

Die vorstehend beschriebene Vorrichtung arbeitet bei der Durchführung des Verfahrens nach der Erfindung wie folgt:

Nachdem die Einzelscheiben auf einen nicht gezeigten Auflegetisch aufgelegt und entsprechend ausgerichtet worden sind, werden sie über die Zuführeinrichtung 12 dem Transportrollensystem des Waagerechtofens 14 einzeln nebeneinanderliegend zugeführt. Hier erfolgt das Vorwärmen der Einzelscheiben auf eine Temperatur von ca. 500° C. Im Anschluß an die eigentliche Vorwärmzone

431

passieren die Einzelscheiben die Feuerpoliereinrichtung
18, wobei die parallel zur Transportrichtung verlaufenden späteren unteren Waagerechtkanten der Einzelscheiben durch Feuerpolieren geglättet werden. Anschließend
werden je zwei Einzelscheiben 46 in der Aufrichteinheit
20 aufrechtgestellt und in dem gewünschten Abstand
sowie in der gewünschten gegenseitigen Ausrichtposition
auf einen Rollengang oder dergleichen abgestellt, woraufhin die Scheiben anschließend die Waagerechtschweißeinrichtung 22 und die Senkrechtschweißeinrichtung 24 passieren und dann nach Durchlaufen des Kühlofens 26 über die Sortierstation 28 und die Palettierstation 30 die Spülstation 32 erreichen und endlich
ausgetragen werden.

Wie Figur 6 und 7 erkennen lassen, weist die Schweißvorrichtung nach der Erfindung bei dem dort gezeigten
Ausführungsbeispiel in Durchlaufrichtung (in Figur 6
und Figur 7 durch den Pfeil, rechts unten, angegeben)
der aufrechtstehend transportierten Scheiben aufeinanderfolgend eine Erwärmungseinrichtung 48, eine Verformungseinrichtung 50, eine Erhitzungseinrichtung 52,
eine Verschmelzeinrichtung 54 und eine Kühleinrichtung
56 auf. Die Unterkante der beim Erreichen der Erwärmungseinrichtung von Figur 6 und 7 bereits miteinander
ausgerichteten und in dem gewünschten Abstand gehaltenen, jeweils zu einer Ganzglasdoppelscheibe zu vereinigenden Natriumsilikatglas-Einzelscheiben ist in Figur 7
als Scheibenunterkante 58 bezeichnet.

Wie Figur 8 erkennen läßt, weist die Erwärmungseinrichtung 48 einen Außenbrenner 60 auf, dessen Brennerstrahlen bzw. flammen im wesentlichen senkrecht zur Ebene
der Einzelscheiben 62, 64 auf die Randbereiche dersel-

431

ben einwirken, wobei ein Teil der Außenbrennerflammen in den zwischen den Einzelscheiben 62, 64 vorgesehenen Scheibenzwischenraum 66 hineinreicht. Figur 9 zeigt, daß die Verformungseinrichtung 50 eine doppelkonische Formrolle 68 aufweist, welche die miteinander zu verschweißenden Kantenbereiche der Einzelscheiben 62, 64 aufeinander zu biegt, ohne diese miteinander jedoch in Anlage zu bringen. Figur 10 zeigt, daß die Erhitzungseinrichtung 52 einen Innenbrenner 70 - er ist ebenso wie der Außenbrenner 60 in bekannter Weise gasgefeuert - aufweist, dessen Brennerstrahlen bzw. -flammen im wesentlichen parallel zur Ebene der Einzelscheiben 62, 64 auf die Kantenbereiche der Einzelscheiben 62, 64 gerichtet sind und teilweise in den Scheibenzwischenraum 66 hineinreichen. Figur 11 schließlich zeigt, daß die Verschmelzeinrichtung 54 eine im wesentlichen zylindrische Schweißrolle 72 aufweist, welche die Einzelscheiben 62, 64 in ihrem Kantenbereich nach Erhitzen auf die Schweißtemperatur mittels der Erhitzungseinrichtung 52 miteinander verschmilzt.

Die vorstehend beschriebene Vorrichtung arbeitet bei dem gezeigten Ausführungsbeispiel wie folgt:

Wie bereits erläutert, werden je zwei Einzelscheiben einer herzustellenden Ganzglasdoppelscheibe zunächst, auf ihren langen Kanten stehend, in Figur 6 bzw. Figur 7 von rechts kommend in die Erwärmungseinrichtung 48 eingeführt, wobei die Einzelscheiben in exakter Relativpositionierung auf dem gewünschten Abstand gehalten werden. Der Transport der Scheiben erfolgt dabei in bekannter Weise z.B. auf einem nicht gezeichneten Rollengang, der sich über die gesamte Durchlauflänge der Vorrichtung erstreckt. In der Erwärmungseinrichtung 48

431

werden die Randbereiche der Einzelscheiben 62, 64 durch die Flammen des Außenbrenners, die im wesentlichen senkrecht auf die Scheibenoberflächen einwirken, auf eine Verformungstemperatur von - im Falle von Natriumsilikatglas - z.B. 700° C erwärmt, wobei diese Verformungstemperatur zwar ausreicht, die Randbereiche der Einzelscheiben 62, 64 zu biegen, diese Temperatur jedoch deutlich unterhalb der Schweißtemperatur von ca. 850° C liegt, bei der ein Verschmelzen der Kantenbereiche der Einzelscheiben miteinander erst möglich ist. Wesentlich ist dabei, daß die Strahlrichtung der Brennerflammen des Außenbrenners 60 in möglichst zur Scheibenebene senkrechter Richtung liegt, damit die Scheibenflächen auf diese Weise unter optimaler Ausnutzung der Außenbrennerenergie rasch erhitzt werden können. Anschließend durchlaufen die Einzelscheiben 62, 64 dann die Formrolle 68, wobei die Kantenbereiche aufeinander zu gebogen werden, ohne daß sie bereits miteinander in Kontakt gebracht würden. Mittels des Innenbrenners 70 von Figur 10, also in der Erhitzungseinrichtung 52, erfolgt dann ein Beaufschlagen der aufeinander zu gebogenen Kantenbereiche mittels der entsprechenden Brennerflammen, die in diesem Fall im wesentlichen in der Scheibenebene verlaufen: Dadurch, daß die Kantenbereiche bereits aufeinander zu gebogen sind, lassen sich die Scheibenränder und -kanten optimal, unter weitestgehender thermischer Schonung der übrigen Scheibenbereiche, auf die Schweiß- oder Verschmelztemperatur erhitzen. Alsdann erfolgt mittels der zylindrischen Schweißrolle 72 (Figur 11) das Zusammendrücken und Miteinander-Verschmelzen der Einzelscheiben 62, 64 zur Ausbildung eines im wesentlichen glatten Schweißsaumes.

In der Kühleinrichtung 56 erfolgt dann das Abkühlen der fertiggestellten Ganzglasdoppelscheiben, wobei der
Kühlvorgang sich wegen der weitgehenden thermischen
Schonung des Zentralbereiches der Scheiben, ermöglicht
durch das stufenweise Erwärmen bzw. Erhitzen der Rand-
bzw. Kantenbereiche der Scheiben zunächst auf die Verformungs- und erst dann auf die Schweißtemperatur,
besonders energie- und zeitgünstig gestaltet.

Wie Figur 12 und 13 erkennen lassen, weist die Aufricht-Vorrichtung nach der Erfindung bei dem dort gezeigten Ausführungsbeispiel zwei Kipprahmen 74, 76 auf,
die um jeweils eine horizontale Kippachse 78, 80 aus
einer im wesentlichen horizontalen, in Figur 13 gezeigten Stellung in eine im wesentlichen vertikale, in
Figur 15 gezeigte Stellung in Richtung der in Figur 13
gezeigten Pfeile hochschwenkbar und wieder zurückschwenkbar sind. In der in Figur 13 gezeigten Horizontalstellung liegen die beiden aus jeweils einer Anzahl
von Hubbalken bestehenden Kipprahmen 74, 76, die in
ihren den Kippachsen 78, 80 benachbarten Bereichen je
eine kurbelartige Ausklinkung 56, 84 aufweisen, unterhalb der Transportebene eines in seinen Einzelheiten
nicht gezeigten Flachförderers, dessen Förderrollen 86
in Figur 13 rechts wiedergegeben sind und der sich, in
Figur 13 von rechts kommend, unterhalb der Unterkante
des Hochkantförderers über den gesamten Aufnahmebereich
der in Aufnahmestellung abgesenkten Kipprahmen 74, 76
erstreckt, wobei die Transportebene seiner Förderrollen
86 oberhalb der abgesenkten Kipprahmen 74, 76 liegt.
Auf dem Flachförderer mit den Förderrollen 86 liegen,
wie Figur 13 erkennen läßt, zwei Einzelscheiben 88, 90
einer herzustellenden Ganzglasdoppelscheibe, die mit
gegenseitigem Abstand in Figur 13 von rechts gesehen
mittels des Flachförderers herangeführt worden sind.

Die Kipprahmen 74, 76 weisen Anschläge 92, 94 auf, gegen die die nach dem Aufrichten unten liegenden Kanten der Einzelscheiben 88, 90, also in Figur 13 die rechte Kante der Einzelscheibe 88 bzw. die linke Kante der Einzelscheibe 90, beim Hochschwenken der Kipprahmen 74, 76 in Anlage bringbar sind.

Figur 12 und 13 lassen weiterhin erkennen, daß die Kipprahmen 74, 76 mittels eines entsprechenden Gestänges von einem Kipprahmenantrieb 96 aus betätigbar sind. Eine Übernahmeeinrichtung weist einen Übernahmeantrieb 98 auf, mittels dessen eine Hubstange 100 in Richtung des in Figur 12 gezeigten Pfeiles hin- und herbeweglich ist, wodurch an an ihr angelenkten Kniehebeln 102 sitzende Übernahmerollen 104 höhenverstellbar sind, wobei dies weiter unten noch in näheren Einzelheiten erläutert wird. Die Übernahmerollen 104 sind Transportrollen 106 eines Hochkantförderers zugeordnet, dessen Funktionsweise weiter unten noch im einzelnen erläutert wird.

Figur 12 und 13 lassen weiterhin erkennen, daß nahe der oberen Scheibenkante der aufgerichteten Einzelscheiben 88, 90 eine Reihe von Klapprollen 108 vorgesehen ist, und zwar je eine Klapprollenreihe auf jeder Seite der hochgestellten Einzelscheiben 88, 90, wobei die entsprechenden Klapprollen jeweils an einem Schwenkbalken 110, 112 sitzen, der mittels eines Klapprollenantriebes 114 um eine in Transportrichtung des die Transportrollen 106 aufweisenden Hochkantförderers schwenkbar ist. In Figur 13 sind die Klapprollen 108 einmal in einer gestrichelt gezeichneten Offenstellung und zum anderen in einer in ausgezogenen Linien gezeichneten Schließstellung wiedergegeben.

431

Über die vorstehend beschriebenen Einzelheiten hinaus
läßt Figur 14 weitere Einzelheiten der Übernahmeeinrichtung mit der Hubstange 100, in Richtung des Doppelpfeiles hin- und herbeweglich, den Kniehebeln 102 und
den Übernahmerollen 104 im Zusammenwirken mit den Transportrollen 106 erkennen, wobei sichtbar ist, daß durch
Betätigung der Hubstange 100 und entsprechendes Verschwenken der Kniehebel 102 die Übernahmerollen 104
einerseits in eine oberhalb der Stützebene der Transportrollen 106 liegende Position, zum anderen aber
auch in eine unterhalb der entsprechenden Transportebene liegende Stellung, in Figur 14 ausgezeichnet
wiedergegeben, bewegbar sind. Ferner läßt Figur 14
weitere Einzelheiten der durch die Klapprollen 108,
betätigbar durch Verdrehen des Schwenkbalkens 110,
wiedergegebenen Ausrichteinrichtung im Bereich der
oberen Kanten der aufgerichteten Einzelscheiben erkennen, zusammen mit den Figuren 15 und 16. Figur 16 zeigt
dabei hinsichtlich der Ausrichteinrichtung für die
oberen Scheibenkanten noch eine Distanzscheibe 116, an
die die Einzelscheiben 88, 90 nach dem Aufrichten mittels der Klapprollen 108 andrückbar sind. Ferner lassen
Figur 15 und Figur 16 erkennen, daß die Transportrollen
106 mit nutförmigen Führungen für die unteren Scheibenkanten versehen sind, welche gewährleisten, daß die
unteren Scheibenkanten nach dem Absetzen der Einzelscheiben 88, 90 auf den Transportrollen 106 die geeignete Ausrichtung und den geeigneten gegenseitigen Abstand haben, zusammenwirkend mit der oberen Ausrichteinrichtung, bestehend aus den Klapprollen 108 und den
Distanzscheiben 116.

Die vorstehend beschriebene Vorrichtung arbeitet wie

431

0255135

folgt:

Auf dem Flachförderer mit den Förderrollen 86 werden,
in Figur 13 gesehen, von rechts aufeinander folgend
Einzelscheiben 88, 90 einer jeweils herzustellenden
Ganzglasdoppelscheibe herangeführt. Die Einzelscheiben
88, 90 laufen auf den Förderrollen 86 des Flachförderers bis in eine oberhalb der beiden in Aufnahmestellung befindlichen Kipprahmen 74, 76 liegende Position,
wobei sich die Kipprahmen 74, 76 in der in Figur 12 und
13 gezeigten Horizontalstellung befinden, in der ihre
Aufnahmefläche einschließlich der Anschläge 92, 94
unterhalb der Transportebene der Förderrollen 86 liegt.
Alsdann werden die Kipparme 74, 76 in Richtung der in
Figur 13 gezeigten Pfeile hochgeschwenkt, wobei die
Einzelscheiben 88, 90 in wachsendem Ausmaß an den Anschlägen 92, 94 zur Abstützung gelangen. Die Ausklinkungen 56, 84 geben dabei den nötigen Freiraum für die
Übernahmeeinrichtung mit der Hubstange 100, den Kniehebeln 102 und den Übernahmerollen 104. Sobald die Kipprahmen 74, 76 die in Figur 15 gezeigte Position erreicht haben, werden die Übernahmerollen 1 04 durch
Betätigung des Übernahmeantriebes 98 über die Hubstange
100 und die Kniehebel 102 so angehoben, daß sie die
unteren Kanten der Einzelscheiben 88, 90 von den Anschlägen 92, 94 der Kipprahmen 74, 76 abheben. Die
Klapprollen 108 werden in die in Figur 15 gezeigte
Position geschwenkt, bei denen sie bereits, bei noch
hochgeklappten Kipprahmen 74, 76, die oberen Scheibenkanten seitlich abstützen. Alsdann werden die Kipprahmen 74, 76 aus der in Figur 15 gezeigten Hochstellung
in die Horizontalstellung zurückgeschwenkt. Die Übernahmerollen 104, werden abgesenkt und stellen die Einzelscheiben 88, 90 in den nutförmigen Führungen der

431

Transportrollen 106 des Hochkantförderers ab. Die
Klapprollen 108 werden eingeschwenkt, so daß sie die
Oberkanten der Einzelscheiben 88, 90 gegen die Distanzscheibe 116 anlegen, woraufhin die Einzelscheiben dann
die in Figur 16 gezeigte Ausrichtung annehmen, in der
sie mittels des die Transportrollen 106 aufweisenden
Hochkantförderers weitertransportiert und insbesondere
einer Schweißstation zugeführt werden können, wie sie
z.B. Gegenstand der deutschen Patentanmeldung P 36 25
798.2-45 ist und in Verbindung mit welcher sich die
vorstehend beschriebene Erfindung in besonderer Weise
eignet, obwohl der Erfindungsgedanke natürlich auch die
Vorbereitung von Einzelscheiben für z.B. die Herstellung von Isolierglasscheiben mit geklebten Randprofilen
umfaßt. Vor dem Einschieben bzw. während des Einschiebens des Scheibenpaares in die Schweißstation der vorstehend beschriebenen Art, bei der Herstellung von
Ganzglasdoppelscheiben, werden die Einzelscheiben 88,
90 natürlich auch in Längsrichtung in exakter Ausrichtung miteinander gebracht, wobei hierfür in bekannter
Weise an ihren in Transportrichtung auf den Transportrollen 106 des Hochkantförderers hinten liegenden Kanten eine entsprechende Schubeinrichtung oder dgl. angreift.

Wie Figur 17 und 18 erkennen lassen, weist die Fixier-
und Führungsvorrichtung nach der Erfindung bei dem dort
gezeigten Ausführungsbeispiel zwei übereinander angeordnete Paare von Saugbändern 118, 120 bzw. 122, 124
auf, die als endlose Plattenbandketten ausgebildet
sind, wobei die einzelnen Platten aus Keramikmaterial
bestehen oder aber an ihren Einzelscheiben 126, 128
einer herzustellenden Ganzglasdoppelscheibe zugewandten
Anlagenfläche oberflächenbehandelt sind, z.B. durch

431

Hartverchromung oder Plasmaspritzen, damit die Kontaktflächen der Saugbänder beim Transport keine Abdrücke
auf dem Glas der Einzelscheiben 126, 128 erzeugen, die
ja in bekannter Weise vor dem Erreichen der Schweißstation, der das Ausführungsbeispiel der Erfindung zugeordnet ist, im Falle von Natriumsilikatglas z.B. auf
ca. 500° C aufgeheizt worden sind. Die Saugbänder 118,
120, 122, 124 werden mittels Antriebswellen 130 in
steuerbarer Weise bewegt. Das obere Paar von Saugbändern 122, 124 ist über einen Verfahrweg 132 zur Anpassung an unterschiedliche Scheibenformate höhenverstellbar, wobei in Figur 18 die minimale Höhe herzustellender Ganzglasdoppelscheiben mit 134 bezeichnet ist. Die
gesamte Vorrichtung ist an nicht gezeigte Konstruktionen aufgehängt bzw. abgestützt.

Wie insbesondere Figur 18 erkennen läßt - die Transportrichtung der Saugbändern 118, 120, 122, 124 ist
mit 138 bezeichnet -, ist eine Spanneinrichtung 140
vorgesehen, mittels welcher die Saugbänder 118, 120,
122, 124 nachgespannt werden bzw. überhaupt in ihrer
Spannung eingestellt werden können. Ferner läßt Figur
18 eine Unterdruckleitung 142 erkennen, mittels welcher
ein weiter unten noch zu erläuternder Vakuumkasten mit
Unterdruck beaufschlagbar ist. Figur 18 läßt ferner
Brennereinrichtungen 144, 146 zum Verschweißen der
oberen und unteren Scheibenkanten erkennen, wie sie
beispielsweise in der DE-PS 25 06 251 beschrieben sind.
Figur 19 zeigt, in welcher Weise die Brennereinrichtung
144 in bekannter Form mittels eines Brennerarmes 148
abgestützt ist.

Wie die Figuren 20 und 21 erkennen lassen, liegt die
Einzelscheibe 126 der herzustellenden Ganzglasdoppel-

431

scheibe an einer ihr zugewandten Anlagefläche des Saugbandes 118 an, welches mit einer Reihe in seiner Längsrichtung mit Abstand angeordneter Saugbohrungen 150
versehen ist. Das Saugband 118 liegt seitlich im wesentlichen dichtend an einer Tragkammer 152 an, die
ebenfalls wie das Saugband 118 langgestreckt ausgebildet ist und über Verbindungsöffnungen 156 von einem
Unterdruckkanal 156 aus mit Unterdruck beaufschlagbar
ist, der seinerseits über die Unterdruckleitung 142 (in
Figur 20 und 21 nicht gezeigt) unter Unterdruck gesetzt
wird.

Zu den technischen Einzelheiten der erfindungsgemäßen
Vorrichtung bzw. des damit durchgeführten Schweißvorganges, der im übrigen etwa in der Weise erfolgen kann,
wie er in der DE-PS 25 06 251 beschrieben ist, sei
bemerkt, daß die Transportgeschwindigkeit der Saugbänder z.B. ca. 1 bis 2 m pro Minute betragen kann, wobei
der Unterdruck z.B. 14 kPa betragen kann, gemessen an
der Kontaktfläche der Saugbänder 118, 120, 122, 124 mit
den Einzelscheiben 126, 20. Der die Unterdruckleitung
142 beaufschlagende Vakuumerzeuger arbeitet mit Heißluft mit einer Ansaugtemperatur von z.B. 500° C und
einer Gesamtdruckdifferenz von 15 kPa. Beispielsweise
kann dabei ein Radialventilator für Heißluft von 500° C
vorgesehen sein, der das vorgenannte Kontakt-Vakuum von
14 kPa erzeugt, welches die erforderliche Haltekraft an
den Kontaktflächen zwischen den Saugbändern 118, 120,
122, 124 und den Glasflächen gewährleistet. Selbstverständlich sind die Führungen der Saugbänder 118, 120,
122, 124 so ausgebildet, daß durch Undichtigkeiten
keine wesentlichen Haltekraftverluste auftreten. Die
Verbindungsöffnungen 154 zwischen dem Unterdruckkanal
156 und der Tragkammer 152 können vorteilhafterweise

431

einstellbar ausgebildet sein, so daß sie beim Ein- und
Ausfahren der Scheiben 126, 128 zumindest teilweise geschlossen werden können, um auf diese Weise Druckverluste zu vermeiden. Die Saugbänder 118, 120, 122, 124
sind mechanisch gekoppelt und in ihrer Transportgeschwindigkeit stufenlos regelbar.

Die Vorrichtung nach der Erfindung arbeitet bei dem
gezeigten Ausführungsbeispiel wie folgt:

Der Abstand der beiden Saugbänder 118, 120 bzw. 122,
124 jedes der Paare von Saugbändern 118, 120 bzw. 122,
124 wird entsprechend dem gewünschten Abstand der Einzelscheiben 126, 128 der herzustellenden Ganzglasdoppelscheibe eingestellt. Außerdem wird die Höhe des
oberen Saugbandpaares 122, 124 entsprechend dem Scheibenformat gewählt. Alsdann werden bereits miteinander
ausgerichtete Paare der Einzelscheiben 126, 128 auf
losen Rollen stehend ggf. unter Zuhilfenahme eines
Schiebers an die Saugbänder 118, 120, 122, 124 übergeben. Infolge des über die stationären Verbindungsöffnungen 154 des stationären Vakuumkastens, gebildet
durch die Tragkammer 152 und den Unterdruckkanal 156,
erzeugten Unterdruckes werden die Scheiben 126, 128
zuverlässig in ihrer Position an den Saugbändern 118,
120, 122, 124 gehalten und durch diese an den Brennereinrichtungen 144, 146 vorbeigeführt. Im Anschluß daran
kann dann z.B., sofern die Waagerechtschweißung durchgeführt worden ist, ein Drehen der Scheiben um eine
senkrecht zur Scheibenebene liegende Achse um 90° erfolgen, woraufhin dann auch die Senkrechtkanten in
einer nachfolgenden, ganz ähnlich wie die vorstehend
beschriebene Vorrichtung aufgebauten Schweißvorrichtung
verschweißt werden können. Schließlich werden die

431

Scheiben aus dem Bereich der Saugbänder 118, 120, 122, 124 über angetriebene Rollen austransportiert, auf denen die Scheiben dann hinter der Schweißstation stehen und z.B. einem Kühlofen zugeführt werden können.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung in ihren verschiedenen Ausführungsformen wesentlich sein.

431

Auslandsserie

Bezugszeichenliste

| | |
|---|---|
| 10 | Transportrichtung |
| 12 | Zuführeinrichtung |
| 14 | Waagerechtofen |
| 18 | Feuerpoliereinrichtung |
| 20 | Aufrichteinheit |
| 22 | Waagerechtschweißeinrichtung |
| 24 | Senkrechtschweißeinrichtung |
| 26 | Kühlofen |
| 28 | Sortierstation |
| 30 | Palettierstation |
| 32 | Spülstation |
| 33 | Ofengehäuse |
| 34 | Polierbrenner |
| 38 | minimaler Scheibenabstand |
| 40 | maximaler Scheibenabstand |
| 41 | Gaszuleitung |
| 42 | Transportrolle |
| 44 | Polierbrennerflamme |
| 46 | Einzelscheibe |
| 48 | Erwärmungseinrichtung |
| 50 | Verformungseinrichtung |
| 52 | Erhitzungseinrichtung |
| 54 | Verschmelzeinrichtung |
| 56 | Kühleinrichtung |
| 58 | Scheibenunterkante |
| 60 | Außenbrenner |

431

- 29 -

0255135

| 62 | Einzelscheibe |
| 64 | Einzelscheibe |
| 66 | Scheibenzwischenraum |
| 68 | Formrolle |
| 70 | Innenbrenner |
| 72 | Schweißrolle |
| 74 | Kipprahmen |
| 76 | Kipprahmen |
| 78 | Kippachse |
| 80 | Kippachse |
| 82 | Ausklinkung |
| 84 | Ausklinkung |
| 86 | Förderrolle |
| 88 | Einzelscheibe |
| 90 | Einzelscheibe |
| 92 | Kipprahmenanschlag |
| 94 | Kipprahmenanschlag |
| 96 | Kipprahmenantrieb |
| 98 | Übernahmeantrieb |
| 100 | Hubstange |
| 102 | Kniehebel |
| 104 | Übernahmerolle |
| 106 | Transportrolle |
| 108 | Klapprolle |
| 110 | Schwenkbalken |
| 112 | Schwenkbalken |
| 114 | Klapprollenantrieb |
| 116 | Distanzscheibe |
| 118 | Saugband |
| 120 | Saugband |
| 122 | Saugband |
| 124 | Saugband |
| 126 | Einzelscheibe |
| 128 | Einzelscheibe |

431

130  Antriebswelle

132  Verfahrweg

134  Minimal-Scheibenhöhe

136  Ofenwand

138  Transportrichtung

140  Spanneinrichtung

142  Unterdruckleitung

144  Brennereinrichtung

146  Brennereinrichtung

148  Brennerarm

150  Saugbohrung

152  Tragkammer

154  Verbindungsöffnung

156  Unterdruckkanal

Auslandsserie

ANSPRÜCHE
=========

1.  Verfahren zum Verschweißen der Kanten von Ganzglasmehrfachscheiben, insbesondere Ganzglasdoppelscheiben, bei dem die sich durch einen langgestreckten Tunnelofen oder dergleichen bewegenden Einzelscheiben
zugeschnitten, ggf. gewaschen, einer zumindest teilweisen Randglättung unterworfen, miteinander ausgerichtet
und nach Vorwärmen auf eine unterhalb der Verformungstemperatur des Glases liegende Vorwärmtemperatur aufrecht stehend an den waagerechten und senkrechten
Scheibenkanten miteinander verschweißt werden, dadurch
gekennzeichnet, daß die zugeschnittenen und ggf. gewaschenen Einzelscheiben einzeln auf ihrer dem Scheibenzwischenraum der herzustellenden Ganzglasmehrfachscheibe abgewandten Fläche liegend vorgewärmt werden;
und daß die Einzelscheiben anschließend aufgerichtet
und zu Einzelscheibengruppen entsprechend jeweils einer
herzustellenden Ganzglasmehrfachscheibe zusammengestellt werden, woraufhin die Kantenverschweißung erfolgt.

2.  Verfahren nach Anspruch 1, dadurch gekennzeichnet,
daß die Einzelscheiben nach dem Vorwärmen zumindest entlang ihrer parallel zu ihrer Transportrichtung verlaufenden späteren unteren Waagerechtkanten feuerpoliert werden.

3. Verfahren nach Anspruch 1, dadurch gekennzeichnet,
daß die Randbereiche der Einzelscheiben zunächst auf
eine unterhalb der Schweißtemperatur liegende Verformungstemperatur erwärmt werden; daß daraufhin unter
einer ersten mechanischen Belastung die miteinander zu
verschweißenden Kantenbereiche der Einzelscheiben ohne
In-Kontakt-Bringen derselben miteinander aufeinander zu
gebogen werden; daß anschließend eine Erhitzung der
Kantenbereiche auf die Schweißtemperatur erfolgt; und
daß dann unter einer zweiten mechanischen Belastung die
erweichten Kantenbereiche miteinander verschmolzen werden.

4. Vorrichtung zum Verschweißen der Kanten von Ganzglasmehrfachscheiben, insbesondere Ganzglasdoppelscheiben unter Hindurchbewegen der Einzelscheiben durch
einen langgestreckten Tunnelofen oder dergleichen, mit
einer Einrichtung zum Zuschneiden der Einzelscheiben,
ggf. einer Wascheinrichtung, einer Einrichtung zum
Glätten zumindest eines Teiles des Scheibenrandes,
einer Vorwärmeinrichtung und einer Schweißeinrichtung
zum Verschweißen der Waagerecht- und der Senkrechtkanten der miteinander ausgerichteten Einzelscheiben jeweils einer Ganzglasmehrfachscheibe in senkrechter
Position derselben, zur Durchführung des Verfahrens
nach einem der vorangehenden Ansprüche, dadurch gekennzeichnet, daß die Vorwärmeinrichtung einen Waagerechtofen (14) zum Aufnehmen einzeln liegend transportierter Einzelscheiben (46) aufweist; und daß eine Aufrichteinheit (20) zum Aufrichten der Einzelscheiben (46) zum
Zusammenstellen derselben zu Einzelscheibengruppen entsprechend jeweils einer herzustellenden Ganzglasmehrfachscheibe vorgesehen ist.

5.    Vorrichtung nach Anspruch 4, gekennzeichnet durch
eine Feuerpoliereinrichtung (18) zum Feuerpolieren
zumindest einer der parallel zur Transportrichtung (10)
verlaufenden späteren unteren Waagerechtkanten der
Einzelscheiben (46) nach dem Vorwärm-, jedoch vor dem
Aufrichtvorgang.

6.    Vorrichtung nach einem der Ansprüche 4 und 5, mit
einer Aufheizeinrichtung zum Erhitzen der Kantenbereiche der für die Fertigung der herzustellenden Ganzglasmehrfachscheiben vorgesehen, im gewünschten gegenseitigen Abstand gehalten und relativ zueinander ausgerichteten Einzelscheiben auf Schweißtemperatur und
einer wirkungsmäßig dieser nachgeordneten mechanischen
Belastungseinrichtung zum In-Anlage-Bringen und Verschmelzen der auf Schweißtemperatur erhitzten Kantenbereiche, zur Durchführung des Verfahrens nach einem der
Ansprüche 4 bis 11, dadurch gekennzeichnet, daß die
Aufheizeinrichtung eine Erwärmungseinrichtung (48) zum
Erwärmen der Randbereiche der Einzelscheiben (62, 64)
auf eine unterhalb der Schweißtemperatur liegende Verformungstemperatur aufweist; daß die Belastungseinrichtung eine der Erwärmungseinrichtung (48) nachgeordnete
Verformungseinrichtung (50) zum Aufeinander-zu-Biegen
der miteinander zu verschweißenden Kantenbereiche ohne
In-Kontakt-Bringen derselben miteinander aufweist; daß

431

die Aufheizeinrichtung eine der Verformungseinrichtung
(50) nachgeordnete Erhitzungseinrichtung (52) zum Erhitzen der Kantenbereiche auf die Schweißtemperatur
aufweit; und daß die Belastungseinrichtung ein der
Erhitzungseinrichtung (52) nachgeordnete Verschmelzeinrichtung (54) zum Miteinander-Verschmelzen der erweichten Kantenbereiche aufweist.


7. Vorrichtung nach Anspruch 6, dadurch gekennzeichnet, daß die Verformungseinrichtung (50) mindestens
eine im wesentlichen doppelkonische Formrolle (68) oder
dergleichen und daß die Verschmelzeinrichtung (54)
wenigstens eine im wesentlichen zylindrische Schweißrolle (72) oder dergleichen aufweist.


8. Vorrichtung nach einem der Ansprüche 4 bis 7 mit
einer Einrichtung zum Aufrichten von je zwei auf einem
Flachförderer in im wesentlichen horizontaler Lage
liegend hintereinander herangeführten Einzelscheiben
einer herzustellenden Doppelglasscheibe in im wesentlichen derjenigen der herzustellenden Doppelglasscheibe
entsprechender Relativposition, mit zwei Kipprahmen,
die aus einer horizontalen, unterhalb der Förderebene
des Flachförderers gelegenen Aufnahmestellung in eine
Übergabestellung schwenkbar sind, einem quer zu dem
Flachförderer transportierenden Hochkantförderer mit
einer Anzahl entlang der Kippachse der Kipprahmen sich
erstreckender Transportrollen, deren Stützebene oberhalb der Förderebene des Flachförderers liegt, und
einem Kipprahmenanschlag, an dem die nach dem Aufrichten unten liegenden Kanten der Einzelscheiben zur Anlage kommen und dessen Abstand von der Kipprahmenachse

431

so einstellbar ist, daß die nach dem Aufrichten unten liegenden Scheibenkanten beim Hochschwenken des Kipprahmens auf den Transportrollen des Hochkantförderers abstellbar sind, dadurch gekennzeichnet, daß beide Kipprahmen (74, 76) aus der horizontalen Aufnahmestellung um einander dicht benachbarte Kippachsen (78, 80) in entgegengesetzten Winkelrichtungen synchron in die im wesentlichen vertikale Übergabestellung hochschwenkbar sind; daß der mit Förderrollen (86) oder dgl. versehene Flachförderer sich unterhalb des Hochkantförderes (100, 102, 104, 106) über den gesamten Aufnahmebereich der beiden in horizontaler Aufnahmestellung unterhalb der Transportebene des Flachförderers (86) befindlichen Kipprahmen (74, 76) erstreckt; und daß jeder der Kipprahmen (74, 76) einen Kipprahmenanschlag (92, 94) aufweist, an dem die nach dem Aufrichten unten liegenden Scheibenkanten der beiden mittels des Flachförderers (86) je oberhalb eines der Kipprahmen (74, 76) positionierten Einzelscheiben beim Hochschwenken der Kipprahmen (74, 76) zur Anlage kommen.

9. Vorrichtung nach einem der Ansprüche 4 bis 8 mit einer Einrichtung zum Führen der sich in aufrechter Stellung durch den langgestreckten Schweißofen bewegenden äußeren Einzelscheiben der Ganzglasmehrfachscheiben, insbesondere Ganzglasdoppelscheiben, beim Verschweißen der waagerechten und/oder senkrechten Scheibenkanten, mit beidseits der Scheibenebene übereinander mit gegenseitigem Abstand angeordneten Führungselementen, die mit Unterdruck beaufschlagbare Saugöffnungen aufweisen, dadurch gekennzeichnet, daß die Führungselemente jeweils zwei einander gegenüberliegende, an der jeweiligen Einzelscheibe (126, 128)

431

angreifende endlose, gesteuert in Transportrichtung der Einzelscheiben antreibbare Saugbänder (118, 120, 122, 126) aufweisen, die mit einer Reihe in ihrer Längsrichtung mit Abstand angeordneter Saugbohrungen (150) versehen sind und deren der Scheibenfläche zugewandtes Trum seitlich im wesentlichen abgedichtet an einem langgestreckten, mit Unterdruck beaufschlagbaren Vakuumkasten (152, 156) oder dergleichen anliegt.

10. Vorrichtung nach Anspruch 9, dadurch gekennzeichnet, daß das Saugband (118, 120, 122, 124) als Plattenbandkette ausgebildet ist.

431

4/7

0255135

**Fig.1**

**Fig.2**

**Fig.3**

**Fig.5**

**Fig.4**

0255135

## Fig.6

56  54  52  50  48

## Fig.7

XI  X  IX  VIII

56  52  48  58

54  50

XI  X  IX  VIII

## Fig.8

48  66

62  64

60

## Fig.9

66  50

62  64

68  68

## Fig.10

66  52

62  64

70

## Fig.11

66  64

62  72

54

**Fig. 12**

**Fig. 13**

# Fig.14

0255135

# Fig.15

110  112

108

108

90

88

106

76

74

102

100  78  80

# Fig.16

110  112

116

108  108

88  90

106

100

6/7    0255135

Fig. 18

Fig. 19

0255135

Fig.17

Fig. 20

Fig. 21

# Europäisches Patentamt

## EUROPÄISCHER RECHERCHENBERICHT

| \ | EINSCHLÄGIGE DOKUMENTE | | EP 87111050.8 |
|---|---|---|---|
| **Kategorie** | **Kennzeichnung des Dokuments mit Angabe, soweit erforderlich, der maßgeblichen Teile** | **Betrifft Anspruch** | **KLASSIFIKATION DER ANMELDUNG (Int Cl 4)** |
| D,A | DE - B - 1 063 349 (LIBBEY-OWENS-FORD GLASS COMPANY) <br><br> * Spalte 12, Zeile 50 - Spalte 14, Zeile 22; Fig. 1,5,11,12,16-19 * | 1,3,6, 7 | C 03 B 23/24 |
| D,A | US - A - 3 384 468 (DEAN) <br><br> * Abstract; Spalte 3, Zeilen 17-68; Spalte 4, Zeilen 7-18; Fig. 5,6. * | 4,6,7 | |
| A | DE - A1 - 2 352 832 (GLAS-UND SPIEGEL-MANUFACTUR AG) <br><br> * Seite 8, Zeile 7 - Seite 10, Zeile 10; Fig. * | 4,8 | |
| D,A | DE - A - 2 363 300 (SAINT-GOBAIN INDUSTRIES) <br><br> * Patentansprüche 1,3-7; Fig. 3,8,9 * | 4,8 | **RECHERCHIERTE SACHGEBIETE (Int. Cl.4)** <br><br> C 03 B <br> C 03 C <br> B 65 G |
| D,A | DE - A1 - 3 529 892 (LENHARDT) <br><br> * Patentansprüche 1,7; Fig. * | 9,10 | |
| D,A | DE - B1 - 2 506 251 (BFG GLASS-GROUP) <br><br> ---- | | |

Der vorliegende Recherchenbericht wurde für alle Patentansprüche erstellt.

| Recherchenort | Abschlußdatum der Recherche | Prüfer |
|---|---|---|
| VIENNA | 09-11-1987 | HAUSWIRTH |

**KATEGORIE DER GENANNTEN DOKUMENTEN**
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

 

& : Mitglied der gleichen Patentfamilie, übereinstimmendes Dokument

EPA Form 1503 03 82